# FASCICULE DE BREVET EUROPEEN

(11) **EP 0 942 510 B1**
(45) Date de publication et mention de la délivrance du brevet: **23.07.2008**
(21) Numéro de dépôt: 99400549.4
(22) Date de dépôt: 08.03.1999
(51) Int. Cl.: H02K 1/22, H02K 21/04

(54) **Machine électrique à double excitation, et notamment alternateur de véhicule automobile**
Elektrische Maschine mit Doppelerregung, insbesondere Wechselstromgenerator für ein Kraftfahrzeug
Double excitation electrical machine, in particular an alternator for a motor vehicle

(30) Priorité: 09.03.1998 FR 9802886
(43) Date de publication de la demande: 15.09.1999
(73) Titulaire: VALEO EQUIPEMENTS ELECTRIQUES MOTEUR, 94000 Créteil (FR)
(72) Inventeur: Akemakou Dokou, Antoine, 94400 Vitry sur Seine (FR); Phounsombat, Sing Kham, 75013 Paris (FR)

(56) Documents cités:
- EP-A- 0 741 444
- EP-A- 0 913 914
- EP-A- 0 932 245
- WO-A-96/30992

## Description

La présente invention a trait d'une façon générale aux machines tournantes telles que les alternateurs pour véhicules automobiles.

La génératrice mono- ou polyphasée que constitue un alternateur classique de véhicule automobile comporte généralement un stator à l'intérieur duquel tourne un rotor pourvu d'un bobinage d'excitation. Ce bobinage est alimenté par des balais en contact avec deux bagues collectrices prévues sur une partie en saillie de l'arbre du rotor.

On connaît déjà notamment par EP-A-0 707 374 des machines tournantes dans lesquelles, en vue notamment d'accroître leur rendement, le champ d'excitation du rotor est réalisé à la fois par des aimants permanents et par des bobines (on parle en général d'excitation « mixte »), et dans lesquelles on contrôle le courant délivré par l'induit à l'aide de moyens de commutation au niveau des bobinages d'excitation, ces moyens de commutation permettant d'inverser sélectivement le sens de l'excitation pour diminuer, voire sensiblement annuler, le flux des aimants.

Cette nécessité d'inverser le sens du courant d'excitation impose d'utiliser un pont de commutation à semi-conducteurs dit en « H », dont le coût est élevé et qui grève donc le prix de revient de la machine.

On connaît également par le brevet WO 96/30992 des machines tournantes comportant un rotor composé de pôles délimités par des encoches. Plusieurs pôles comportent des aimants créant ainsi des pôles aimantés. Les pôles restants sont bobinés de sorte que les pôles adjacents sont bobinés dans des directions opposées pour produire des champs magnétiques alternés nord et sud. Ainsi, des pôles bobinés sont adjacents à la paire de pôles aimantés.

La présente invention vise à pallier ces inconvénients et à proposer une machine, en particulier une machine tournante telle qu'un alternateur, qui possède une excitation mixte et dans laquelle la régulation du courant délivré puisse s'effectuer en jouant sur une excitation par bobines qui s'effectue de manière unidirectionnelle, et en particulier en faisant varier l'excitation par les bobines entre une valeur essentiellement nulle et une valeur maximale pour délivrer respectivement une énergie limitée, voire essentiellement nulle, et une énergie maximale.

Un autre objet de l'invention, dans une telle machine, est d'assurer une bonne récupération du flux engendré par les aimants lorsque la machine est dans un état d'excitation, en minimisant en particulier les pertes de flux occasionnées par exemple par un flux circonférentiel dans le rotor.

Ainsi la présente invention concerne une machine électrique, comportant un stator et un rotor, le stator comportant au moins un bobinage d'induit logé dans au moins une paire d'encoches définissant entre elles une pluralité de pôles, et le rotor comportant une pluralité de pôles en relation avec les pôles du stator et des moyens aptes à sélectivement établir des circuits magnétiques fermés passant, via les pôles de stator et de rotor, autour des brins du ou des bobinages d'induit, caractérisée en ce que lesdits moyens comportent des aimants permanents d'excitation et des bobinages d'excitation, les aimants permanents et les bobinages d'excitation étant agencés de telle sorte que, lorsque les bobinages d'excitation ne sont traversés par aucun courant, les pôles du rotor présentent une configuration constituée alternativement d'un pôle individuel donné et d'une succession, en nombre impair supérieur à 1, de pôles inverses, et que, lorsque les bobinages d'excitation sont traversés par un courant, les pôles du rotor présente une configuration constituée de pôles individuels Nord et Sud alternés.

D'autres caractéristiques de la présente invention sont définies dans les revendications dépendantes 2 à 7 ci-annexées.

D'autres aspects, buts et avantages de la présente invention apparaîtront mieux à la lecture de la description suivante de formes de réalisation préférées de celle-ci, donnée à titre d'exemple non limitatif et faite en référence aux dessins annexés, sur lesquels :
la figure 1 illustre schématiquement en coupe transversale un ensemble de rotor et de stator selon une forme de réalisation de base de l'invention, dans un étant de non-excitation,
la figure 2 illustre le même ensemble de rotor et de stator dans un état d'excitation,
la figure 3 illustre schématiquement en coupe transversale un ensemble de rotor et de stator selon une variante de réalisation des figures 1 et 2, et
la figure 4 illustre un perfectionnement d'une machine électrique selon la forme de réalisation de base de la présente invention.

On notera préliminairement que, d'une figure à l'autre, des éléments ou parties identiques ou similaires sont désignés dans la mesure du possible par les mêmes signes de référence.

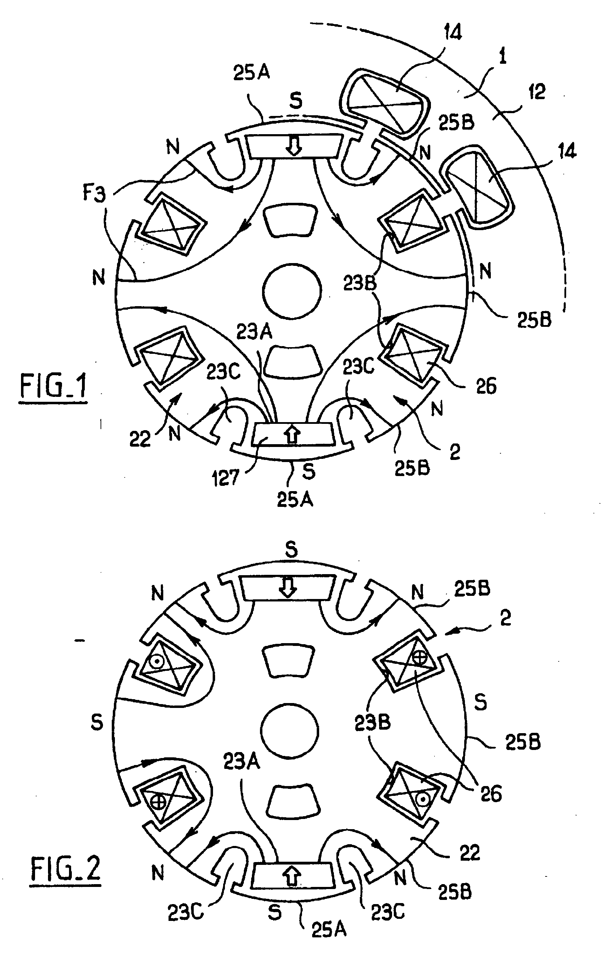

Maintenant en référence à la figure 1, on a représenté un ensemble de rotor et de stator selon une forme de réalisation de base de l'invention.

Elle se distingue principalement en ce que chaque aimant (désigné ici par la référence 127) est disposé en surface au niveau d'un pôle unique du rotor.

Ainsi l'on trouve une pluralité d'aimants 127 régulièrement espacés à la périphérie du rotor, et qui peuvent être en nombre pair ou impair.

La structure du rotor 2 comporte dans ce cas une carcasse définissant, au droit d'un pôle d'aimant 25A, un logement peu profond 23A pour un aimant 127 engendrant des lignes de flux essentiellement radiales et dirigées de l'extérieur vers l'intérieur du rotor. ce pôle d'aimant 25A est délimité par une encoche peu profonde 23C, laissée vide, suivie d'un pôle de bobinage 25B, d'une encoche 23B pour un premier brin 26 de bobinage, suivie d'un autre pôle de bobinage 25B, suivi d'une autre encoche 23B pour le deuxième brin 26 du même bobinage, suivie d'un troisième pôle de bobinage 25B, suivi enfin d'une autre encoche 23C, suivie elle même d'un nouveau pôle d'aimant 25A associé à un logement 23A recevant un nouvel aimant 127, cette configuration étant répétée N fois, en l'espèce deux fois, le long de la périphérie du rotor 2.

Le comportement de la machine en l'absence d'excitation est illustré sur la figure 1. Le pôle Nord situé sur la face interne de chaque aimant 127 va créer des lignes de flux F3 qui vont se propager vers les différents pôles 25B du rotor, pour en faire des pôles Nord également, tandis que le pôle d'aimant 25A est un pôle Sud.

La configuration des pôles est donc dans ce cas S-N-N-N-S-N-N-N. On comprend que, dans cette situation, l'énergie magnétique transmise au stator est minimale.

Lorsque les bobinages 26 sont excités, alors ils engendrent chacun un flux qui s'oppose à la propagation des lignes de flux F3 depuis les aimants 127 vers les pôles 25B qui sont situés entre les deux brins d'un même bobinage, tandis que ce flux créé par les bobinages renforce au contraire le flux qui va se diriger de chaque aimant 127 vers chacun des pôles 25B qui encadrent le pôle d'aimant, comme illustré sur la figure 2.

Dans ce cas, on comprend que les pôles du rotor vont adopter une configuration ...-N-S-N-S-N..., qui permet d'assurer un transfert d'énergie vers le stator qui croît progressivement avec le courant d'excitation dans les bobinages 26.

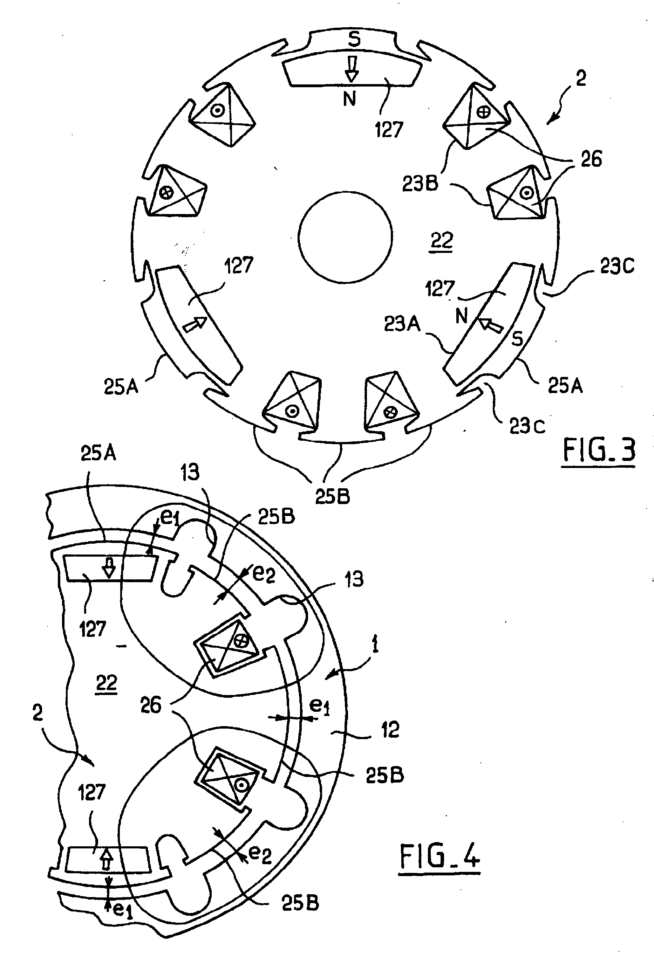

Alors que les figure 1 et 2 illustrent une machine monophasée avec huit pôles au rotor et huit pôles au stator, la figure 3 illustre une variante de réalisation, pour machine triphasée, comportant douze pôles au rotor et trente-six pôles au stator.

La réalisation d'un rotor à douze pôles implique dans ce cas le recours à trois aimants permanents 127 séparés mutuellement de 120^{°}, et de trois bobinages situés entre les paires d'aimants respectives. On observe en outre sur la figure 3 une configuration particulière des encoches vides 23C, en forme générale de virgules qui s'écartent du pôle d'aimant associé 25A.

On notera ici que l'on pourrait, pour multiplier le nombre de pôles sans accroître le nombre d'aimants, prévoir deux bobinages à deux brins chacun entre deux aimants successifs, De plus,

le nombre d'aimants peut être le cas échéant impair, ce qui peut dans certains cas faciliter la conception et l'industrialisation.

Par ailleurs, et maintenant en référence à la figure 4 qui illustre partiellement une autre variante d'un ensemble de rotor et de stator selon la forme de réalisation de base de la présente invention, qui permet de diminuer encore l'énergie magnétique transmise au stator en l'absence d'excitation.

On observe sur la figure 4 que chaque pôle 25B qui est immédiatement voisin d'un pôle d'aimant 25A présente par rapport au stator un entrefer e2 qui est sensiblement supérieur à l'entrefer et qui existe, d'une part entre les pôles d'aimant 25A et le stator, et d'autre part entre les autres pôles 25B et le stator.

De la sorte, dans l'état de non excitation, on privilégie sensiblement la circulation des lignes de flux depuis la face interne de chaque aimant vers les pôles 25B qui sont décalés de deux rangs par rapport au pôle d'aimant, pour ainsi privilégier, dans la configuration polaire du rotor, une configuration de type ...-N-...-S-...-N-..., dans laquelle le flux transmis au stator est théoriquement nul.

Bien entendu, les entrefers e2 reste suffisamment petits pour que, dans l'état d'excitation, le couplage entre les pôles 25B adjacents aux pôles d'aimant 25A et le stator soit convenable.

Bien entendu, la présente invention n'est nullement limitée aux formes de réalisation décrites et représentées.

## Revendications

1. Machine électrique, comportant un stator (1) et un rotor (2), le stator comportant au moins un bobinage d'induit (14) logé dans au moins une paire d'encoches (13) définissant entre elles une pluralité de pôles, et le rotor comportant une pluralité de pôles en relation avec les pôles du stator et des moyens aptes à sélectivement établir des circuits magnétiques fermés passant, via les pôles (25) de stator et de rotor, autour des brins (14) du ou des bobinages d'induit, **caractérisée en ce que** lesdits moyens comportent des aimants permanents d'excitation (127) et des bobinages d'excitation (26), les aimants permanents et les bobinages d'excitation étant agencés de telle sorte que, lorsque les bobinages d'excitation ne sont traversés par aucun courant, les pôles du rotor présentent une configuration constituée alternativement d'un pôle individuel donné et d'une succession, en nombre impair supérieur à 1, de pôles inverses, et que, lorsque les bobinages d'excitation sont traversés par un courant, les pôles du rotor présentent une configuration constituée de pôles individuels Nord et Sud alternés.

2. Machine électrique selon la revendication 1, **caractérisée en ce que** lesdits moyens comportent au moins deux aimants permanents d'excitation (127) aptes à établir chacun un flux magnétique, les aimants (127) sont disposés chacun dans un logement (23A) situé au droit d'un pôle d'aimant de rotor et présentant un sens d'aimantation radial, entre chaque paire d'aimants successifs, au moins un bobinage d'excitation possédant deux brins (26,26) et apte à engendrer chacun de façon réglable une composantes de flux aptes à s'opposer aux flux engendrés par les aimants de ladite paire, les brins de bobinages étant logés dans des encoches (23B) s'étendant chacune entre deux pôles successifs (25B) de rotor, et **en ce que** le rotor comporte des premières encoches vides (23C) délimitant deux à deux un pôle d'aimant (25), puis un nombre impair de pôles de bobinage (25B), et ainsi de suite, les pôles de bobinage adjacents délimitant deux à deux des encoches respectives (23B) de bobinage.

3. Machine électrique selon la revendication 2, **caractérisée en ce que** les entrefers entre les pôles successifs du rotor et le stator sont alternativement d'une première dimension (e1) et d'une seconde dimension (e2) différente de la première, les pôles d'aimant présentant l'entrefer (e1) le plus petit.

4. Machine électrique selon l'une des revendications 1 à 3, **caractérisée en ce qu'**il est prévu entre deux aimants successifs (127) un bobinage unique à deux brins (26,26).

5. Machine électrique selon la revendication 4, **caractérisée en ce que** le rotor (2) comprend un nombre de pôles (25) égal à un multiple entier de quatre.

6. Machine électrique selon l'une des revendications 2 à 5, **caractérisée en ce qu'**il est prévu entre deux aimants successifs (127) au moins deux bobinages à deux brins chacun (26), enroulés dans le même sens.

7. Machine selon l'une des revendications 1 à 6, **caractérisée en ce qu'**elle consiste en un alternateur de véhicule automobile.

## Claims

1. Electric machine, comprising a stator (1) and a rotor (2), the stator comprising at least one rotor winding (14) which is accommodated in at least one pair of notches (13) which define between one another a plurality of poles, and the rotor comprising a plurality of poles in relation to the poles of the stator, and means which can establish selectively closed magnetic circuits which pass via the stator and rotor poles (25), around conductors (14) of the rotor winding(s), **characterised in that** the said means comprise permanent excitation magnets (127) and excitation windings (26), the permanent magnets and the excitation windings being arranged such that, when the excitation windings do not have any current passing through them, the poles of the rotor have a configuration which consists alternately of a given individual pole and a succession, in an odd number greater than 1, of inverse poles, and **in that**, when the excitation windings have a current passing through them, the poles of the rotor have a configuration consisting of individual alternating North and South poles.

2. Electric machine according to claim 1, **characterised in that** the said means comprise at least two permanent excitation magnets (127) which can each establish a magnetic flow, the magnets (127) are each disposed in a receptacle (23A) which is situated at right-angles to a pole of a rotor magnet, and have a radial magnetisation direction, between each successive pair of magnets, at least one excitation winding having two conductors (25, 26) and each being able to generate in an adjustable manner a flow component which can oppose the flows generated by the magnets of the said pair, the winding conductors being accommodated in notches (23B) which each extend between two successive rotor poles (25B), and **in that** the rotor comprises first empty notches (23C) which delimit in pairs a magnet pole (25), then an uneven number of winding poles (25B) and so on, the adjacent winding poles delimiting in pairs respective winding notches (23B).

3. Electric machine according to claim 2, **characterised in that** the gaps between the successive poles of the rotor and stator are alternately of a first dimension (e1) and a second dimension (e2) which is different from the first, the magnetic poles having the smallest gap (e1).

4. Electric machine according to one of claims 1 to 3, **characterised in that** between two successive magnets (127) there is provided a winding which is unique to two conductors (26).

5. Electric machine according to claim 4, **characterised in that** the rotor (2) comprises a number of poles (25) equal to a whole multiple of four.

6. Electric machine according to one of claims 2 to 5, **characterised in that** between two successive magnets (127) there are provided at least two windings, each with two conductors (26) which are wound in the same direction.

7. Machine according to one of claims 1 to 6, **characterised in that** it consists of a motor vehicle alternator.

## Patentansprüche

1. Elektrische Maschine mit einem Stator (1) und einem Rotor (2), wobei der Stator wenigstens eine Ankerspule (14) umfasst, die in wenigstens einem Paar Nuten (13) aufgenommen ist, die mehrere zwischen ihnen liegende Pole definieren, und wobei der Rotor mehrere Pole im Verhältnis zu den Polen des Stators und Mittel umfasst, die in der Lage sind, wahlweise geschlossene Magnetkreise herzustellen, die über die Stator- und Rotorpole (25) um Endstücke (14) der Ankerspule bzw. der Ankerspulen herum verlaufen, **dadurch gekennzeichnet, dass** die besagten Mittel Erregerpermanentmagnete (127) und Erregerspulen (26) umfassen, wobei die Permanentmagnete und die Erregerspulen so angeordnet sind, dass wenn die Erregerspulen von keinem Strom durchflossen werden, die Pole des Rotors eine Anordnung aufweisen, die abwechselnd aus einem gegebenen einzelnen Pol und einer Folge von entgegengesetzten Polen in einer ungeraden Anzahl größer als 1 besteht, und dass wenn die Erregerspulen von einem Strom durchflossen werden, die Pole des Rotors eine Anordnung aufweisen, die aus abwechselnden einzelnen Nord- und Südpolen besteht.

2. Elektrische Maschine nach Anspruch 1, **dadurch gekennzeichnet, dass** die besagten Mittel wenigstens zwei Erregerpermanentmagnete (127) umfassen, die in der Lage sind, jeweils einen Magnetfluss zu erzeugen, wobei die Magnete (127) jeweils in einer in Höhe eines Rotormagnetpols befindlichen Aufnahme (23A) angeordnet sind und eine radiale Magnetisierungsrichtung aufweisen, sowie zwischen jedem Paar von aufeinanderfolgenden Magneten wenigstens eine Erregerspule mit zwei Endstücken (26, 26) umfassen, die in der Lage ist, jeweils auf regelbare Weise eine Flusskomponente zu erzeugen, die in der Lage ist, den durch die Magnete des besagten Paars erzeugten Fluxkomponenten entgegenzuwirken, wobei die Spulenendstücke in Nuten (23B) aufgenommen sind, die sich jeweils zwischen zwei aufeinanderfolgenden Rotorpolen (25B) erstrecken, und dass der Rotor erste leere Nuten (23C) umfasst, die paarweise einen Magnetpol (25), dann eine ungerade Anzahl von Spulenpolen (25B) und so weiter begrenzen, wobei die benachbarten Spulenpole paarweise entsprechende Spulennuten (23B) begrenzen.

3. Elektrische Maschine nach Anspruch 2, **dadurch gekennzeichnet, dass** die Luftspalte zwischen den aufeinanderfolgenden Polen des Rotors und der Stator abwechselnd eine erste Abmessung (e1) und eine von der ersten verschiedene zweite Abmessung (e2) aufweisen, wobei die Magnetpole den kleinsten Luftspalt (e1) aufweisen.

4. Elektrische Maschine nach einem der Ansprüche 1 bis 3, **dadurch gekennzeichnet, dass** zwischen zwei aufeinanderfolgenden Magneten (127) eine einzige Spule mit zwei Endstücken (26, 26) vorgesehen ist.

5. Elektrische Maschine nach Anspruch 4, **dadurch gekennzeichnet, dass** der Rotor (2) eine Anzahl von Polen (25) gleich einem ganzen Mehrfachen von vier umfasst.

6. Elektrische Maschine nach einem der Ansprüche 2 bis 5, **dadurch gekennzeichnet, dass** zwischen zwei aufeinanderfolgenden Magneten (127) wenigstens zwei Spulen mit jeweils zwei Endstücken (26) vorgesehen sind, die in der gleichen Richtung gewickelt sind.

7. Elektrische Maschine nach einem der Ansprüche 1 bis 6, **dadurch gekennzeichnet, dass** sie aus einem Wechselstromgenerator für Kraftfahrzeuge besteht.
